# EUROPEAN PATENT APPLICATION

(11) **EP 4 557 728 A1**
(43) Date of publication of application: **21.05.2025**
(21) Application number: 23210630.2
(22) Date of filing: 17.11.2023
(51) Int. Cl.: H04N 19/124, H04N 19/176, H04N 19/154, H04N 19/159, H04N 19/194

(54) **A METHOD AND AN ENCODER FOR INTER-ENCODING AN IMAGE FRAME**

(71) Applicant: Axis AB, 223 69 Lund (SE)
(72) Inventor: Edpalm, Viktor, 223 69 Lund (SE); Ekenstierna, Johan, 223 69 Lund (SE); Gren, Martin, 223 69 Lund (SE)
(74) Representative: AWA Sweden AB

(57) **Abstract**

There is provided a method and an encoder for inter-encoding an image frame in a sequence of image frames. The method comprises obtaining (S02) a compression level for each pixel block of the image frame, inter-encoding the image frame in a first encoding pass (S04) using the obtained compression level and identifying (S06) pixel blocks in the image frame that were intra-coded in the first encoding pass and for which the obtained compression level exceeds a compression level threshold. The method further comprises lowering (S08) the compression level for the identified pixel blocks, and inter-encoding the image frame in a second encoding pass (S10) using the lowered compression level for the identified pixel blocks and the obtained compression level for each remaining pixel block.

## Description

### Technical field

The present invention relates to the field of video coding. In particular, it relates to a method and an encoder for inter-encoding an image frame in a sequence of image frames.

### Background

When encoding image frames of a video, it is common to apply spatially varying compression levels to each image frame in order to reduce bitrate but at the same time maintain a perceived level of quality in different areas of the image frame. Lower compression levels may be used in regions of the image frame of more interest to a viewer while higher compression levels may be used for regions of less interest to the viewer. This might be achieved by using more bits to encode the interesting regions of the image and less bits for regions of less interest. The determination of what constitutes a region of interest (ROI) may vary depending on application, e.g., the level of motion or the level of image detail may determine whether a particular region of the image should be regarded as an ROI.

When using such methods as the ones described above, the inventors have noted problems with artefacts appearing in regions of the image frames with high compression levels under certain circumstances. These types of artefacts are characterized by a noticeable difference in perceived quality between different areas of the affected regions. These artefacts tend to worsen over time, increasing up until the next I-frame is encoded. Examples of when these issues have been observed are in background areas of a moving object in an image, such as the road behind a car, a subtle light change across a wall, or aurora borealis reflected on a lake.

There is thus a need for improvement within this context.

### Summary of the invention

In view of the above, it is thus an object of the present invention to overcome or mitigate the issues described above by providing an encoding method that improves the perceived quality in high compression areas of the image frame.

The above objective is achieved by the invention as defined by the appended independent claims. Advantageous embodiments are defined by the appended dependent claims.

The inventors have realized that artefacts appearing in highly compressed areas of the image frame are caused by some pixel blocks being intra-coded while other neighboring pixel blocks are inter-coded. The pixel blocks that are inter-coded are temporally predicted from information in previously encoded frames in the video. Thanks to the temporal prediction, the remaining residuals to encode are typically small which allows the pixel block to be encoded and perceived to be of high quality despite the high compression level. This is in contrast to the intra-coded blocks which are only spatially predicted from information in the current frame. In that case, the residuals to encode are typically much larger, leading to a relatively lower perceived quality for the same high compression level. As a result, the inter-coded blocks are perceived as having higher quality than the intra-coded blocks. This difference in quality causes artefacts to appear in the decoded video and will be especially noticeable around the border between an intra-coded block and adjacent inter-coded blocks. The application of a deblocking filter at the decoder has a tendency to further emphasize the artefacts by introducing ringing artefacts at these borders. Inter-coded blocks in future image frames of the video will also reference these intra-coded blocks causing the issues to worsen over time.

In order to overcome or mitigate the issues described above, a two-pass encoding scheme is suggested to identify and selectively lower the compression for intra-coded pixel blocks located in highly compressed areas of an image frame. The two-pass encoding scheme of this invention includes the steps of performing a first encoding pass using obtained compression levels applied to each pixel block in the frame to identify intra-coded pixel blocks in the image frame that may cause the described artefacts to appear, i.e., intra-coded pixel blocks for which the compression level exceeds a compression level threshold. The compression levels of blocks that have been identified as potentially problematic in the first encoding pass are lowered before running a second encoding pass. Lowering the compression levels for these identified blocks typically has the effect of increasing the probability of the encoder selecting to inter-encode the identified blocks in the second encoding pass. Thus, since the artefact is caused by some pixel blocks being intra-coded and others inter-coded, the probability of the artefact appearing after the second encoding pass is reduced. Further, if the identified blocks are ultimately intra-encoded also in the second encoding pass, the compression levels will still have been lowered and the perceived quality will have been improved, reducing the impact of any potential artefacts still present after the second encoding pass.

The term "pixel block" should be understood to mean a set of neighboring pixels that have been grouped together. These pixel blocks form the units in the image frame on which the encoder operates when encoding the image frame. These pixel blocks may also be denoted macroblocks, coding tree units or encoding units, depending on the encoding standard used to encode the images. The pixel blocks may in most cases be square, comprised of, e.g., 8×8, 16×16, or 32×32 pixels. It is also possible to group the pixels into pixel blocks of other sizes and shapes.

The term "compression level of a pixel block" refers to the degree or level at which image data in the pixel block is compressed during encoding of the pixel block. When the compression is achieved by quantization, as is often the case for transform-based codecs, the compression level may correspond to a level of quantization applied when encoding the pixel block. Such a quantization level may also be denoted as a quantization value, a quantization parameter, a quantization index, or a step size depending on the encoding standard used to encode the image frames in the first and the second encoding pass.

The wording "inter-encoding the image frame in a first encoding pass" and "inter-encoding the image in a second encoding pass" refer to the fact that the image frame is inter-coded twice, i.e., in two rounds or phases. The first encoding pass hence refers to the first time the image frame is inter-encoded, and the second encoding pass refers to the second time the image frame is inter-encoded. Therefore, the method is also sometimes referred to as a two-pass encoding method or scheme herein. The purpose of the first encoding pass is to identify and lower the compression level of pixel blocks in the encoded image frame that may give rise to artefacts. The image frame is then encoded a second time in the second encoding pass using the lowered compression levels for the identified pixel blocks to output an encoded video in which the artefacts are mitigated.

The invention constitutes three aspects; a method, an encoder and a computer-readable storage medium. The second and third aspects may generally have the same features and advantages as the first aspect. It is further noted that the invention relates to all combinations of features unless explicitly stated otherwise.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Fig. 1 shows a sequence of image frames including both intra-coded and inter-coded image frames.
Fig. 2 schematically illustrates an encoder used for inter-encoding an image frame according to embodiments.
Fig. 3 is a flowchart of a method for inter-encoding an image frame in a sequence of image frames according to embodiments.
Fig. 4a shows an image frame of a monitored scene including two regions of interest.
Fig. 4b shows compression levels applied to different regions of the image frame of Fig. 4a.
Fig. 4c shows three identified pixel blocks in the image frame of Fig. 4a.
Fig. 4d shows updated compression levels for the three identified pixel blocks of Fig. 4c.
Fig. 5 is a flowchart of a method for inter-encoding an image frame in a sequence of image frames according to a first embodiment which adaptively determines for which inter-coded frames a second encoding pass should be applied.
Fig. 6 is a flowchart of a method for inter-encoding an image frame in a sequence of image frames according to a second embodiment which adaptively determines for which inter-coded frames a second encoding pass should be applied.

### Detailed description of embodiments

The present invention will now be described more fully hereinafter with reference to the accompanying drawings, in which embodiments of the invention are shown.

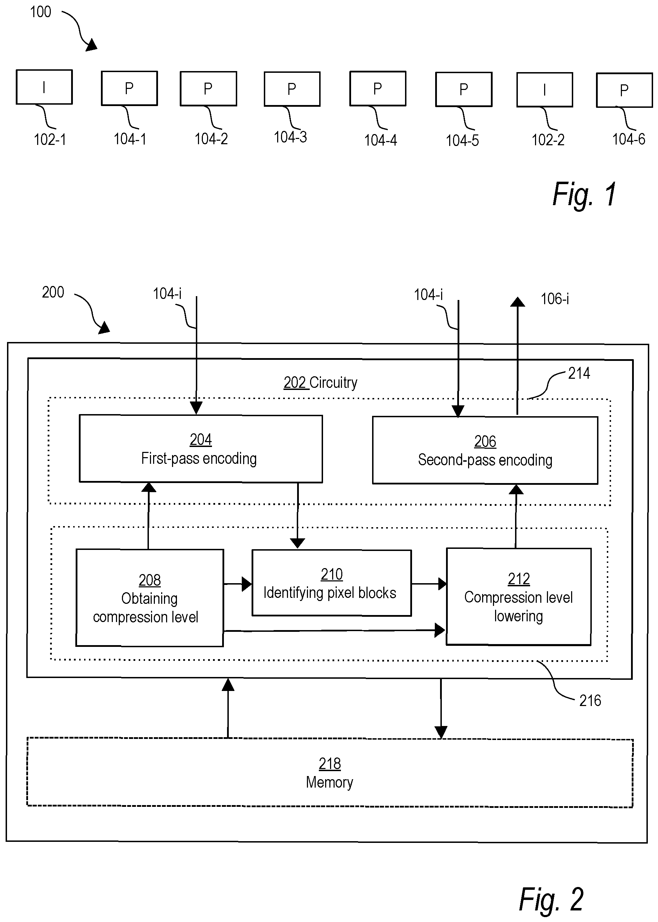

Fig. 1 shows a sequence of image frames 100 including image frames 102-1 and 102-2 to be intra-coded and image frames 104-1 to 104-6 to be inter-coded. An intra-coded image frame is encoded independently from all other image frames in the sequence of image frames, exploiting spatial redundancy of the pixels within the image frame itself without referencing any other image frames. These types of intra-coded image frames are commonly referred to as intra-frames, I-frames or key frames. An inter-coded frame is encoded to be dependent on other frames in the sequence of image frames, exploiting temporal redundancy of the pixels between the image frames. These types of inter-coded frames are commonly referred to as inter-frames or delta frames and may be forward predicted frames, P-frames, or bidirectionally predicted frames, B-frames.

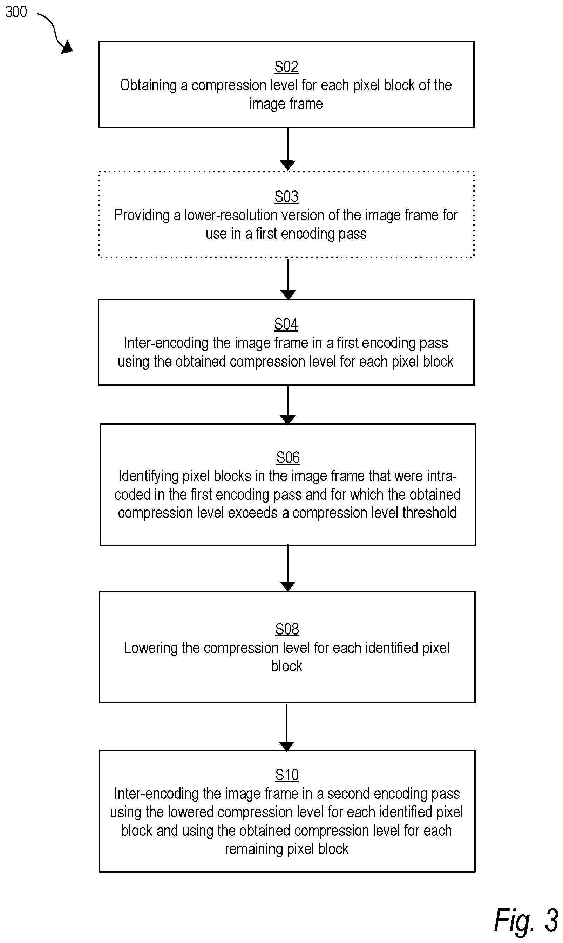

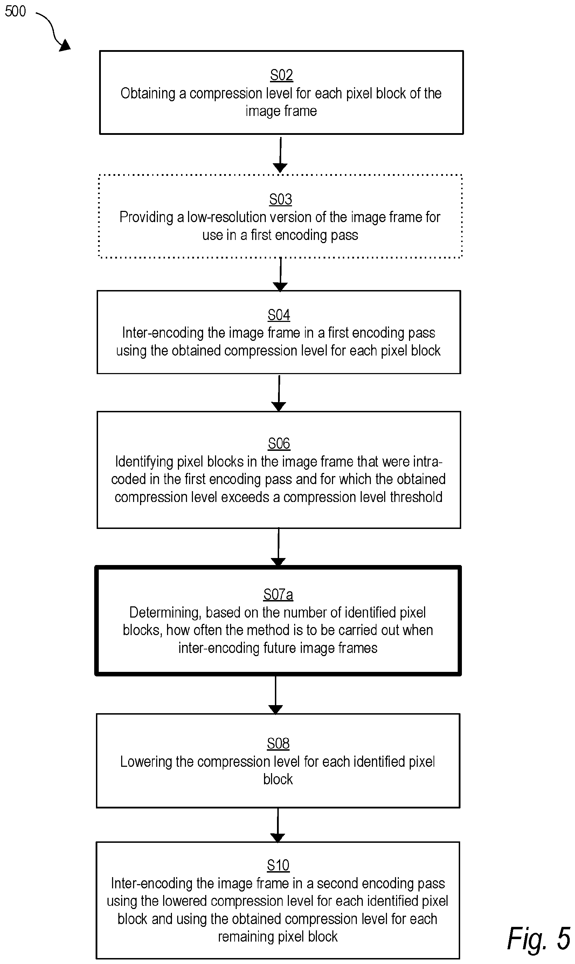

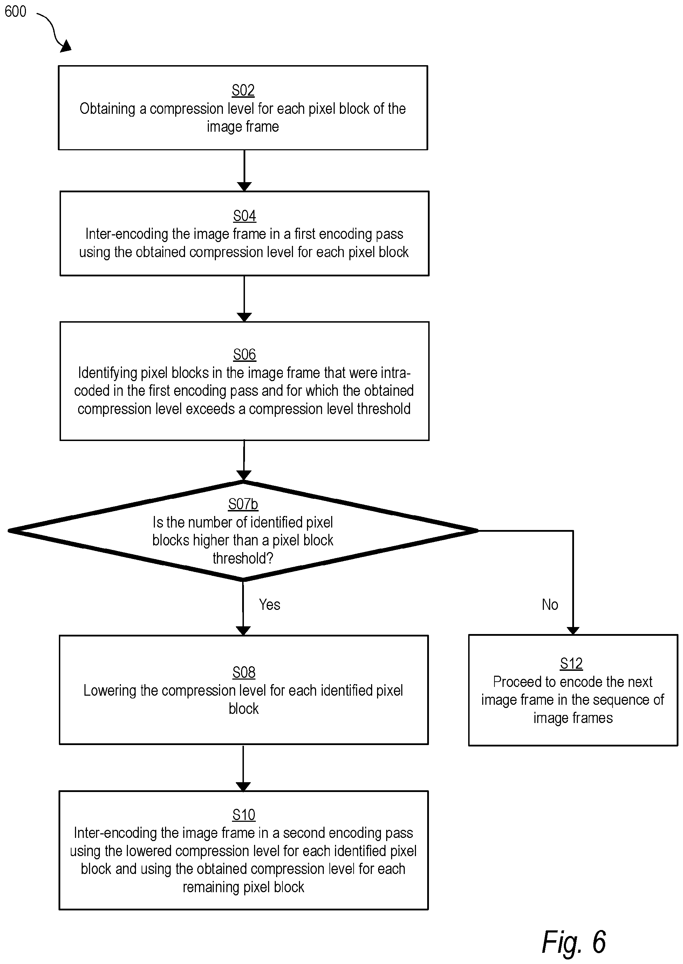

The invention includes a method for inter-encoding an image frame in a sequence of image frames, such as one or more of image frames 104-1 to 104-6 in the sequence 100, using a two-pass encoding scheme, the steps of which are illustrated in Fig. 3 and will be described in more detail further below. The method may be carried out each time an image frame 104-1 to 104-6 in the sequence of image frames 100 is to be inter-encoded. Alternatively, it may be carried out for a selection of image frames in the sequence of image frames 100, the selection being fewer than every image frame in the sequence of image frames 100 that is to be inter-coded. The selection of frames may be predetermined, such as including every n:th image frame which is to inter-encoded, where n is an integer larger than one, or it may be determined adaptively as will be described in more detail below with reference to Figs 5 and 6. Image frames which are to be inter-encoded and are not included in the selection may be encoded using the first encoding pass while the second encoding pass and steps related to the second encoding pass may be skipped for these frames.

Fig. 2 shows an encoder 200 for inter-encoding an image frame in a sequence of image frames, such as one or more of image frames 104-1 to 104-6 of Fig. 1. The encoder 200 comprises circuitry 202 which is configured to carry out any method described herein. In more detail, the circuitry 202 is configured to implement functions of the encoder 200, here illustrated by a first-pass encoding function 204, a second-pass encoding function 206, a compression level obtaining function 208, a pixel block identifying function 210, and a compression level lowering function 212. It will be understood from the disclosure herein that the encoder 200 in some embodiments has more functions than those illustrated in Fig. 2. The arrows in Fig. 2 reflect a flow of data between the functional blocks of the encoder 200. For example, compression levels obtained by function 208 are input to the first-pass encoding function 204 together with an image frame 104-i to be inter-coded. The output of the first-pass encoding function 204, i.e., the inter-encoded version of the image frame 104-i, is provided as input to the pixel block identifying function 210 together with compression levels obtained by the compression level obtaining function 208. The identified pixel blocks are then input to the compression level lowering function 212, which in turn outputs compression levels to be used by the second-pass encoding function 206 when inter-encoding the image frame 104-i a second time. The second-pass encoding function 206 finally outputs an inter-encoded version 106-i of the image frame 104-i.

The functions disclosed herein may hence be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. In the disclosure, the circuitry is hardware that carry out or is programmed to perform the recited functionality. The hardware may be any hardware disclosed herein or otherwise known which is programmed or configured to carry out the recited functionality.

In a pure hardware implementation, each of the functions 204, 206, 208, 210, 212 may have corresponding circuitry which is dedicated and specifically designed to implement the function. The circuitry may be in the form of one or more integrated circuits, such as one or more application specific integrated circuits or one or more field-programmable gate arrays. By way of example, the first-pass encoding function 204 may thus correspond to circuitry which, when in use, inter-encodes an image frame in a first encoding pass using the obtained compression level for each pixel block of the image frame, and the pixel block identifying function 210 may correspond to circuitry which, when in use, identifies pixel blocks in the image frame that were intra-coded in the first encoding pass and for which the obtained compression level exceeds a compression level threshold.

In an implementation which also includes software, the circuitry 202 may include a processor. Processors are considered processing circuitry or circuitry as they include transistors and other circuitry therein. In this case, the circuitry 202 may be seen as a combination of hardware and software, the software being used to configure the hardware and/or processor. In more detail, the processor is configured to operate in association with a memory 218 and computer code stored on the memory 218. The functions 204, 206, 208, 210, 212 may each correspond to a portion of the computer code stored in the memory 218, that, when executed by the processor, causes the encoder 200 to carry out the function. Thus, the combination of the processor, memory 218, and the computer code causes the functions 204, 206, 208, 210, 212 of the encoder 200 to occur.

In view of the above, the memory 218 may hence constitute a (non-transitory) computer-readable storage medium, such as a non-volatile memory, comprising computer program code which, when executed by a computer, causes the computer to carry out any method herein. Examples of non-volatile memory include read-only memory, flash memory, ferroelectric RAM, magnetic computer storage devices, optical discs, and the like.

It is to be understood that it is also possible to have a combination of a hardware and a software implementation, meaning that some of the functions 204, 206, 208, 210, 212 are implemented by dedicated circuitry and others in software, i.e., in the form of computer code which is executed by a processor. For example, in one embodiment the first-pass encoding function 204, and the second-pass encoding function 206 are implemented in hardware. In particular, they may be implemented by a hardware-implemented encoding unit 214 which performs both the first and the second encoding pass. The first encoding pass and the second encoding pass may hence be performed by the same encoding unit 214, i.e., performed by the same hardware or alternatively by the same combination of hardware and software. This is advantageous in that no additional hardware (or software) needs to be included to implement the additional, second, encoding pass. Further, the compression level obtaining function 208, the pixel block identifying function 210, and the compression level lowering function 212 may be implemented as software, such as by a software-implemented control unit 216 executed by a processor.

The operation of the encoder 200 when carrying out a method for inter-encoding an image frame in a sequence of image frames, such as an image frame 104-i corresponding to one of image frames 104-1 to 104-6 of the sequence of image frames 100, will now be described with reference to the flow chart of Fig. 3 and with further reference to Figs 1, 2 and 4a-d.

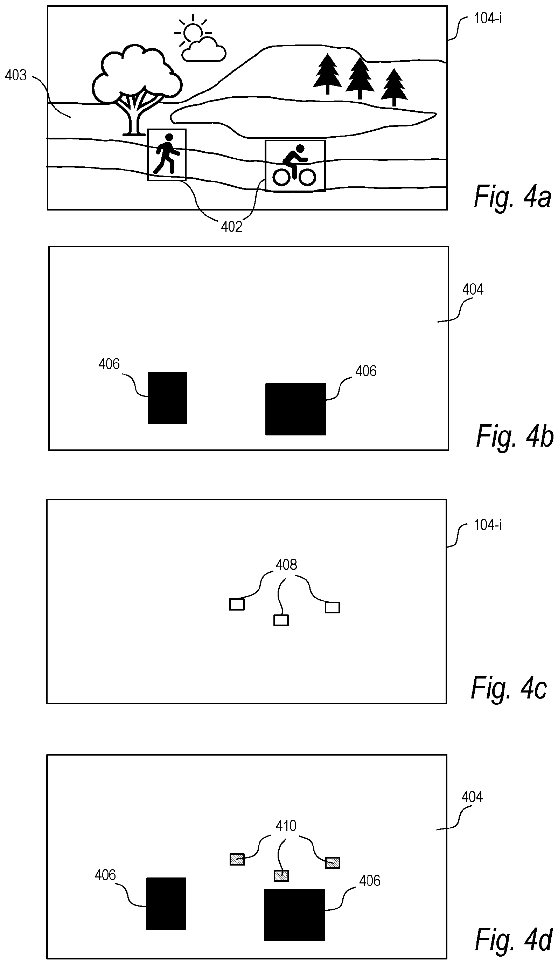

In step 02, a compression level for each pixel block of the image frame is obtained by the compression level obtaining function 208. The obtained compression level is higher for pixel blocks in some regions of the image frame than for pixel blocks in other regions of the image frame. For example, as shown in Fig. 4a, an image frame 104-i to be inter-encoded by the encoder 200 depicts a scene which includes trees and a lake on which there is a subtle light change due to a cloud passing in front of the sun. Further, two moving objects, a runner and a cyclist, are travelling on a path in front of the lake. Some regions 402 of the image frame 104-i may include information of more interest to a viewer than other regions 403, e.g., moving objects such as a person running or riding a bicycle may be of more interest than the lake or trees depicted in the background. Those regions 402 that may be of more interest to a user are commonly called regions of interest (ROI). It is usually of more importance to maintain a high level of quality in a ROI than in a non-ROI. Thus, the compression level may be higher for pixel blocks which are not within a region of interest of the image frame 104-i than for pixel blocks which are within a region of interest 402 of the image frame 104-i. This is illustrated in Fig.4b showing the obtained compression level for different regions of the image frame 104-i. A higher compression level 404, shown in white, has been applied to the pixel blocks in the background areas 403 of the image frame 104-i while a lower compression level 406, shown in black, has been applied to the pixel blocks in the regions of interest 402 depicting the runner and the cyclist. It is to be understood that the example of Figs 4a and 4b is simplified in that it for illustration purposes only shows two different compression levels. In a real-world example, a wide range of compression levels may be set for the different pixel blocks in the image frame depending on their relevance or importance.

In order to obtain the compression level for each pixel block, the compression level obtaining function 208 may apply any known algorithm which is suitable for this purpose. In particular, it may apply an algorithm which first determines relevance of different regions in the image frame and then sets compression levels for the pixel blocks depending on the relevance of the regions in which the pixel blocks are located. The relevance may be set such that pixel blocks in more relevant regions are assigned a lower compression level than pixel blocks in less relevant regions. What properties are deemed to be relevant may differ between different applications. For example, for surveillance applications, the relevancy of a region may be set based on the level of details in the region. A region with a low level of detail, such as the sky, is not particularly interesting for video surveillance and is therefore deemed non-relevant. A region with intermediate level of detail, such as regions depicting people or vehicles, is of great interest for video surveillance and is therefore deemed to be of high relevance. On the other end of the scale, a region with a lot of small details, such as a lawn or foliage, is also not of particular interest for video surveillance and is deemed non-relevant. An example of an algorithm that can be used is described in applicant's patent EP3021583B1.

Some of the available algorithms for determining relevance of different image regions are color blind in the sense that they operate on the luma-channel of the image frames, but neglect the chroma channels. These algorithms will for instance fail to detect relevant motion of image details which are present in the chroma channels but not in the luma-channel, such as if there had been an aurora reflection on the lake in Fig. 4a. As a result, these algorithms will set a high compression level in regions where the content in the luma channel is of low relevance, but where the content in the chroma channels is of a higher relevance, such as containing motion. The high compression level in these regions in combination with the fact that there is content (motion) in the chroma channels which is costly to encode has been found to trigger the appearance of the type of encoding artefacts that the method 300 aims to mitigate.

In step 04, the first-pass encoding function 204 of the encoder 200 inter-encodes the image frame 104-i in a first encoding pass using the obtained compression level for each pixel block of the image frame, wherein each pixel block is either inter-coded or intra-coded. For this purpose, the first-pass encoding function 204 may implement inter-encoding according to a video encoding technique, such as H.264, H.265, AV1, VP9, without the need for further modifications. The decision of whether to intra- or inter-encode a pixel block is made in a per se known way by the first-pass encoding function 204 on a block-by-block basis with the purpose of minimizing the encoding cost of each pixel block. For example, the cost of inter-encoding the pixel block may be calculated and compared to a calculated cost of intra-encoding the same pixel block. If the cost of inter-encoding the pixel block is lower than the cost of intra-encoding the same pixel block, a decision is taken to inter-encode the pixel block. Otherwise, a decision to intra-code the pixel block is taken. Further, as the costs for inter-encoding and intra-coding a pixel block depend on the compression level, the decision to inter- or intra-coding a pixel block in turn depends on the compression level of the pixel block. For example, lowering the compression level may make it more likely that a pixel block is inter-coded. Accordingly, even if the image frame 104-i is to be inter-coded, some of the pixel blocks will be intra-coded and others inter-coded in the first encoding pass of step S04, which in turn may give rise to the observed artefacts in regions of high compression level. In particular, in the example of Fig. 4a, the subtle light change on the lake may be a potential source of such artefacts.

In step 06, the pixel block identifying function 210 identifies pixel blocks in the image frame 104-i that were intra-coded in the first encoding pass and for which the obtained compression level exceeds a compression level threshold. The compression level threshold is determined so that intra-coded pixel blocks in a non-ROI of the image frame may be identified by the pixel block identifying function 210 but intra-coded pixel blocks in a ROI 402 may remain unidentified. The compression level threshold may be assigned a specific value. The compression level threshold may be the same for all pixel blocks. However, it may be difficult to set a compression level threshold in terms of an absolute specific value which applies to the whole image frame since the appropriate threshold to use varies with the image content within the image frame. Therefore, it is preferred to set the compression level threshold per pixel block. This may be accomplished by each pixel block in the image frame having a respective compression level threshold which is set in relation to a compression level used when a spatially corresponding pixel block was last intra-coded in a previous image frame in the sequence. In this way, the compression level threshold is not set in absolute terms for the whole image frame but is set per pixel block and in relation to a compression level of an intra-coded spatially corresponding pixel block in a previous image frame. The compression level of the spatially corresponding pixel block, which presumably has a similar image content as the pixel block, hence acts as a baseline level for setting the compression level threshold for the pixel block. A higher baseline level leads to a higher compression level threshold for the pixel block and vice versa. To exemplify, suppose that the method is currently applied to image frame 104-3 of the sequence of image frames 100. A first pixel block in image frame 104-3 has a spatially corresponding pixel block in each of the previously encoded image frames 104-2, 104-1, and 102-1. Further assume that the spatially corresponding pixel block to the first pixel block was intra-coded when image frames 102-1 and 104-1 were encoded, but inter-coded when image frame 104-2 was encoded. Accordingly, a spatially corresponding pixel block of the first pixel block was last intra-coded in image frame 104-1 since image frame 104-1 was encoded later than image frame 102-1. The compression level threshold of the first pixel block is therefore set in relation to the compression level used when intra-coding the spatially corresponding pixel block in image frame 104-1. Similarly, a second pixel block in image frame 104-3 has a spatially corresponding second pixel block in each of the previously encoded image frames 104-2, 104-1, and 102-1. In this case, assume that the spatially corresponding pixel block was intra-coded in the intra-frame 102-1, but not in the inter-coded frames 104-1, and 104-2. Therefore, the compression level threshold of the second pixel block is set in relation to the compression level used when intra-coding the spatially corresponding pixel block in the intra-coded frame 102-1. In this regard, a *spatially corresponding pixel block* of a certain pixel block is generally meant a pixel block which has the same spatial position, e.g., in terms of pixel coordinates, as the certain pixel block but in another image frame.

In another example, each pixel block in the image frame has a respective compression level threshold which is set in relation to a compression level used when encoding a spatially corresponding pixel block in the latest intra-coded frame. Thus, the compression level threshold for each pixel block in image frames 104-1 to 104-5 will be set in relation to the compression level used when encoding the spatially corresponding pixel block in the intra-frame 102-1. Further, the compression level threshold for each pixel block in image frame 104-6 will be set in relation to the compression level used when encoding the spatially corresponding pixel block in the intra-frame 102-2. This alternative is easier to implement at the cost of a somewhat lower effectiveness in identifying potentially problematic intra-coded blocks.

Further, the compression level threshold of a pixel block in the image frame may be set at a predefined positive offset from said compression level used when a spatially corresponding pixel block was last intra-coded in a previous image frame of the sequence. Thus, the compression level threshold of a pixel block may be said to correspond to a certain relative increase in compression level, or, viewed differently, a certain relative decrease in perceived quality, compared to the spatially corresponding pixel block. It has been found that the same predefined positive offset advantageously may be used for all pixel blocks. This positive offset may be equal to or larger than a smallest increase in compression level of an intra-coded pixel block that leads to a noticeable difference in image quality to a human viewer. The choice of the positive offset will depend on different factors, such as the encoding standard used and the encoder implementation. However, as a guidance, a positive offset of about six steps of the quantization parameter for the H.264 or H.265 encoding standard has for some encoder implementations been found to lead to a just noticeable image quality difference, while 10-15 steps have been found to lead to a clearly visible quality difference. For example, suppose that a positive offset of six has been predefined. A compression level threshold for each pixel block in the image frame is calculated by adding this positive offset to the compression level used when a spatially corresponding pixel block was last intra-coded, i.e., if the compression level for a spatially corresponding pixel block in a previous frame in the image sequence was 31, the compression level threshold for the spatially corresponding pixel block in the current frame will be 37.

The compression level may also be pre-determined without regard to any compression levels used in previous frames, e.g., it may be set to a fixed value such as 35 on a scale between 0 and 51, meaning that pixel blocks having an obtained compression level exceeding this value will be identified by the pixel block identifying function 210 if it has also been intra-coded by the first-pass encoding function 204. In this example the quantization parameter range of H.264 was used to set the scale. However, it is understood that other scales and threshold values may be used for other codecs.

As illustrated in Fig.4c, three pixel blocks 408 have been identified by the pixel block identifying function 210, i.e., they have been intra-coded by the first-pass encoding function 204 and have compression values exceeding the compression level threshold. The number three is selected for ease of understanding and it is understood that in a real-world example the number of identified intra-coded blocks may take other, both smaller and larger, values. A comparison with Fig. 4a and Fig. 4c shows that these three pixel blocks 408 are located in a non-ROI of the image frame depicting the lake on which there was a subtle light change and thus have a high probability of causing the artefacts described herein since they are intra-coded blocks in a highly compressed area of the image frame. Steps S08 and S10 will further describe how the effect of these artefacts can be mitigated.

In step 08, the compression level lowering function 212 lowers the compression level for each identified pixel block. The reason for doing so is to decrease the effect of appearing artefacts and to increase the probability of the pixel block being inter-encoded by the second-pass encoding function 206. How much the compression level is lowered differs between embodiments, and the choice of which approach to use in a practical implementation will be a trade-off between artefact mitigation and bitrate increase. However, it should be recalled that any decrease of the compression level, even the smallest possible one, leads to a reduction of artefacts.

In some embodiments, the compression level is lowered by a fixed predetermined value, such as by one or a few steps. In other embodiments the compression level is lowered dependent on the compression level threshold of each pixel block. In more detail, the compression level for each identified pixel block may be lowered to a value which is equal to or below the compression level threshold. Reducing the compression levels to such a value has been found to lead to an acceptable trade-off between artefact mitigation and bitrate increase in many situations. For example, suppose that the compression level threshold for a pixel block in the image frame is set to be 34. Said pixel block is identified by the pixel block identifying function 210 and has an obtained compression level of 42, i.e., 8 steps above the set threshold. The compression level lowering function 212 will lower the compression level for the identified pixel block to 34 and pass the new compression level value to the second-pass encoding function 206 for further processing. This is illustrated in Fig. 4d where the lowered compression levels 410 of the three identified pixel blocks 408 are shown in a grid pattern compared to the compression levels of other pixel blocks in the image frame which are shown in white for pixel blocks in a non-ROI of the image frame and black for pixel blocks in a ROI of the image frame.

Further, referring to the embodiments discussed above with respect to step S06, the compression level for each identified pixel block may be lowered to the compression level used when a spatially corresponding pixel block was last intra-coded in a previous image frame in the sequence. In this case, the compression level is hence not only lowered to be equal to or fall below the compression level threshold but is reduced to be equal to the compression level of the last intra-coded spatially corresponding pixel block. This has been found to even further mitigate the artefacts associated with the identified pixel blocks, although at the price of a somewhat higher bitrate.

In step 10, the second-pass encoding function 206 will inter-encode the image frame 104-1 in a second encoding pass using the lowered compression level for each identified pixel block 408 and using the obtained compression level for each remaining pixel block. The second-pass encoding function 206 generally operates in the same way as the first-pass encoding function 204, i.e., it uses the same version of encoder implementation as the first-pass encoding function 204. That may be achieved by the first-pass encoding function 204 and the second-pass encoding function 206 using the same or identical hardware or software with the same settings for performing the inter-encoding in steps S04 and S10. In some embodiments the first and second encoding passes are performed by the same encoding unit 214, i.e. they are performed by the same encoding hardware and/or encoding software. In other embodiments the first and the second encoding passes are performed by different, but identical encoding units, such as by two identical instances of encoding hardware or encoding software, such as by two identical encoder cores. Therefore, all characteristics of the first-pass encoding function 204 mentioned herein should be understood to generally also apply to the second-pass encoding function 206. The main difference between the first and the second encoding passes is the compression level applied to each pixel block in the image frame 104-1. In the first encoding pass, the original compression levels obtained by the compression level obtaining function 208 will be applied to each pixel block in the image frame. In the second encoding pass, as illustrated in Fig. 4d, the lowered compression levels 410 will be applied to the pixel blocks 408 identified by the identifying pixel block function 210. As illustrated in Fig. 4b and Fig. 4d, any pixel blocks not identified by the identifying pixel block function 210 will be encoded by the second-pass encoding function 206 with the original compression levels 404, 406, shown in black and white, i.e., the compression levels for these non-identified pixel blocks will remain unchanged.

Since the compression level of the identified pixel blocks have been lowered, the appearance of any potentially remaining artefacts will have been reduced and the total perceived quality of the image frame will have increased. In particular, the difference between the intra-coded and inter-coded blocks in the regions of higher compression will be less noticeable since the identified intra-coded blocks will be encoded at a higher quality in the second encoding pass. As mentioned before, a lowered compression level also increases the probability of the identified pixel blocks being inter-coded by the second-pass encoding function 206 further mitigating the effect of any artefacts that may have been present in the image frame before encoding.

In some embodiments, the inter-encoding in the first encoding pass in step S04 operates on a lower resolution of the image frame 104-1 than the inter-encoding in the second encoding pass in step S10. In particular, the second encoding pass in step S10 may operate on the original (full) resolution of the image frame 104-1 while the first encoding pass S04 may operate on a lower resolution of the image frame 104-1. For this purpose, the encoder 200 may further implement a function which provides a lower-resolution version of the image frame 104-1 for use in the first encoding pass, for instance by down-sampling the image frame 104-1. By way of example, the lower resolution may correspond to a half or a quarter of the original resolution. An advantage of this embodiment is that processing power is saved in the first encoding pass due to the lower resolution of the image frame 104-1. This advantage comes at the risk of some regions with artefacts not being identifiable at the lower resolution, although it has been found that in practice most problematic regions are identifiable also at the lower resolution.

For embodiments which implement step S03 it is noted that a pixel block in the image frame 104-1 at lower resolution may correspond to several pixel blocks in the image frame at the original resolution. By way of example, with a down-scaling factor of four, a pixel block of 16x16 pixels in the lower resolution version of the image frame 104-1 may correspond to four pixel blocks of 16x16 pixels in the original image frame 104-1. The encoder 200 keeps track of this correspondence between pixel blocks in the lower-resolution version of the image frame 104-1 and pixel blocks in the original image frame 104-1. This allows the encoder 200 to, in step S06, map pixel blocks identified in the lower-resolution version of the image frame 104-1 to pixel blocks in the original image frame 104-1. These pixel blocks in the original image frame 104-1 may then have their compression levels lowered in step S08 as explained above.

As mentioned in conjunction with Fig. 1, the two-pass inter-encoding scheme is not necessarily carried out for every image frame 104-1 to 104-6 that is to be inter-coded, but rather for a subset thereof. For the remaining image frames to be inter-encoded, the encoder 200 may instead apply a single-pass inter-encoding scheme, e.g., by applying steps S02 and S04 of the method of Fig. 3. An advantage of not applying a second encoding pass for every image frame to be inter-coded is that processing power is saved. However, if the second encoding pass is not applied often enough there is a risk that there will be artefacts in high compression areas. Thus, the second encoding pass should preferably only be applied when it is needed to reduce artefacts in areas of high compression. In the following, two embodiments will be described in which it is adaptively determined for which inter-coded frames 104-1 to 104-6 the second encoding pass should be applied.

A first of these two embodiments relates to a method 500 which is illustrated in the flow chart of Fig. 5. In addition to the steps of the method 300 described in connection to Fig. 3, the method 500 further includes a step S07a of determining, based on the number of identified pixel blocks in a currently inter-encoded image frame, how often the method 500 is to be carried out when inter-encoding future image frames in the sequence of image frames. *How often* may refer to at which frame interval the method 500 should be repeated. For example, suppose that the encoder 200 first carries out the method 500 when inter-coding image frame 104-1, and it in step S07a determines that the method 500 should be carried out at a frame interval of three. Then the encoder 200 will carry out the method 500 a next time when inter-encoding the image frame 104-4. When inter-encoding the intermediate frames 104-2 and 104-3, the encoder 200 may instead apply a single-pass encoding scheme, e.g. by applying steps S02 and S04.

In step S07a, a higher number of identified pixel blocks preferably results in the method 500 being carried out more often, such as at a lower frame interval, than would be done at a lower number of identified pixel blocks. In this way, the second encoding pass is run less often when there is a lower presence of artefacts, as measured by the number of identified pixel blocks, and at a shorter frame interval when the number of identified pixel blocks indicates that there is a higher presence of artefacts. This allows the increase in processing power caused by the second encoding pass to be balanced against the need for the second encoding pass. Further, since the step S07a is repeated each time the method 500 is applied to an image frame, the frame interval is adapted to the present presence of artefacts in the image frame. Thus, the frame interval will typically be longer during time periods of the video sequence when there is a low presence of artefacts after the first encoding pass S04, while it will be shorter during time periods when there is a high presence of artefacts after the first encoding pass S04. The number of identified pixel blocks may be given in absolute numbers, or as a percentage. In the latter case, the percentage may correspond to the ratio between the number of identified pixel blocks and the total number of pixel blocks in the frame. Alternatively, it may correspond to the ratio between the number of identified pixel blocks and the number of pixel blocks for which the obtained compression level exceeds a compression level threshold.

In order to implement step S07a, the encoder 200 may use a look-up table which associates the number of identified pixel blocks with a frame interval at which the method 500 should be repeated. Such a look-up table may be determined in advance, and the values in the table may be set such that a desired trade-off between processing power and artefacts is achieved.

In this embodiment, similar to what was described in connection to step S03 of Fig. 3, the encoder 200 preferably operates on a lower than full resolution of the image frame in the first encoding pass of step S04 for reasons of saving processing power.

A second adaptive embodiment relates to a method 600 which is illustrated in the flow chart of Fig. 6. In addition to the steps of the method 300 described in connection to Fig. 3, the method 600 further includes a step S07b of the encoder 200 checking whether the number of identified pixel blocks is higher than a pixel block threshold. In case this condition is satisfied, the encoder 200 proceeds to carry out steps S08 and S10. Otherwise, it proceeds to encode the next image frame in the sequence of image frames, step S12. With this method, the steps S02 of obtaining a compression level, S04 of inter-encoding the image frame in a first encoding pass, and S06 of identifying pixel blocks are carried out each time an image frame is to be inter-encoded, but the steps S08 of lowering the compression level and S10 encoding the image frame in the second encoding pass are only carried out on a condition that the number of identified pixel blocks in the image frame is higher than a pixel block threshold. The check performed in step S07b may be seen as a way of checking whether there is a need for a second encoding pass. In more detail, if the number of potentially problematic pixel blocks after the first encoding pass S04 is large enough, i.e., higher than the pixel block threshold, processing power is spent on applying an additional second encoding pass using a lowered compression level in the problematic blocks. Otherwise, the result after the first encoding pass S04 is deemed good enough and the result of the first encoding pass S04 will be the output of the encoder 200 for this frame. The method 600 may hence be applied to each image frame to be inter-coded, but for some of them the second encoding pass of step S10 is carried out only on an as-needed basis. Also in this case, the number of identified pixel blocks may be given in absolute numbers, or as a percentage.

In this embodiment, the image frame to be inter-encoded is preferably encoded in full resolution in the first encoding pass of step S04 as well as in the second encoding pass of step S10. The reason is that one wants the encoder 200 to provide an encoded image frame at full resolution also in case a negative outcome is reached in step S07b and the encoder 200 outputs the result from the first encoding pass of step S04.

The pixel block threshold may be determined in advance, e.g., by applying a test procedure in which different pixel block thresholds are tested for one or more video test sequences and the one that gives a desired trade-off between artefacts and processing power is selected. It would also be possible to adjust the pixel block threshold while the method 600 is run on a video sequence, such that for instance a desired proportion of the image frames to be inter-coded is subject to the second encoding pass.

In the above, only inter-encoding has been described. However, it is to be understood that the encoder 200 of Fig. 2 further may be configured to intra-code the image frames 102-1 and 102-2 which are to be intra-coded. When performing intra-coding, the encoder 200 may operate in a conventional manner and the intra-coding is therefore not described in more detail herein.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method (300) for inter-encoding an image frame (104-i) in a sequence of image frames (100), comprising:
obtaining (S02) a compression level (404, 406) for each pixel block of the image frame, wherein the compression level is higher for pixel blocks in some regions (402) of the image frame than for pixel blocks in other regions (403) of the image frame,
inter-encoding the image frame in a first encoding pass (S04) using the obtained compression level for each pixel block of the image frame, wherein each pixel block is either inter-coded or intra-coded,
identifying (S06) pixel blocks (408) in the image frame that were intra-coded in the first encoding pass and for which the obtained compression level exceeds a compression level threshold,
lowering (S08) the compression level for each identified pixel block, and
inter-encoding the image frame (104-i) in a second encoding pass (S10) using the lowered compression level (410) for each identified pixel block (408) and using the obtained compression level (404, 406) for each remaining pixel block.

2. The method of claim 1, wherein the compression level for each identified pixel block (408) is lowered to a value which is equal to or below the compression level threshold.

3. The method of claim 1 or 2, wherein each pixel block in the image frame (104-i) has a respective compression level threshold which is set in relation to a compression level used when a spatially corresponding pixel block was last intra-coded in a previous image frame in the sequence (100).

4. The method of claim 3, wherein the compression level threshold of a pixel block in the image frame (104-i) is set at a predefined positive offset from said compression level used when a spatially corresponding pixel block was last intra-coded in a previous image frame of the sequence (100).

5. The method of claim 4, wherein the compression level for each identified pixel block (408) is lowered to said compression level used when a spatially corresponding pixel block was last intra-coded in a previous image frame in the sequence (100).

6. The method of any one of the preceding claims, wherein the method is carried out each time an image frame (104-i) in the sequence of image frames (100) is to be inter-encoded.

7. The method of any one of the preceding claims, wherein the method is carried out for a selection of image frames in the sequence of image frames (100), the selection being fewer than every image frame in the sequence of image frames that is to be inter-coded.

8. The method of claim 7, further comprising:
determining (S07a), based on the number of identified pixel blocks (408) in a currently inter-encoded image frame (104-i), how often the method is to be carried out when inter-encoding future image frames in the sequence of image frames, wherein a higher number of identified pixel blocks (408) results in the method being carried out more often than would be done at a lower number of identified pixel blocks (408).

9. The method of any one of the preceding claims, wherein the inter-encoding in the first encoding pass (S04) operates on a lower resolution of the image frame than the inter-encoding in the second encoding pass (S10).

10. The method of claim 7, wherein the steps of obtaining a compression level (S02), inter-encoding the image frame in a first encoding pass (S04), and identifying pixel blocks (S06) are carried out each time an image frame is to be inter-encoded, but the steps of lowering the compression level (S08) and encoding the image frame in the second encoding pass (S10) are only carried out on a condition that the number of identified pixel blocks (408) in the image frame is higher than a pixel block threshold.

11. The method of any one of the preceding claims, wherein the compression level (404, 406) is higher for pixel blocks which are not within a region of interest of the image frame than for pixel blocks which are within a region of interest (402) of the image frame.

12. The method of any one of the preceding claims, wherein the first encoding pass (204) and the second encoding pass (206) are performed by the same encoding unit (214).

13. The method of any one of the preceding claims, wherein the compression level (404, 406) corresponds to a quantization level.

14. An encoder (200) for inter-encoding an image frame (104-i) in a sequence of image frames (100), comprising circuitry (202) configured to carry out the method of any one of claims 1-13.

15. A computer-readable storage medium (218) comprising computer program code which, when executed by a computer, causes the computer to carry out the method of any one of claims 1-13.

## Amended claims

### Amended claims in accordance with Rule 137(2) EPC.

**1.** A method (300) for inter-encoding an image frame (104-i) in a sequence of image frames (100), comprising:
obtaining (S02) a compression level (404, 406) for each pixel block of the image frame, wherein the compression level corresponds to a quantization level and is higher for pixel blocks in some regions (402) of the image frame than for pixel blocks in other regions (403) of the image frame,
inter-encoding the image frame in a first encoding pass (S04) using the obtained compression level for each pixel block of the image frame, wherein each pixel block is either inter-coded or intra-coded,
identifying (S06) pixel blocks (408) in the image frame that were intra-coded in the first encoding pass and for which the obtained compression level exceeds a compression level threshold,
lowering (S08) the compression level for each identified pixel block, and
inter-encoding the image frame (104-i) in a second encoding pass (S10) using the lowered compression level (410) for each identified pixel block (408) and using the obtained compression level (404, 406) for each remaining pixel block.

**2.** The method of claim 1, wherein the compression level for each identified pixel block (408) is lowered to a value which is equal to or below the compression level threshold.

**3.** The method of claim 1 or 2, wherein each pixel block in the image frame (104-i) has a respective compression level threshold which is set in relation to a compression level used when a spatially corresponding pixel block having a same spatial position as the pixel block was last intra-coded in a previous image frame in the sequence (100).

**4.** The method of claim 3, wherein the compression level threshold of a pixel block in the image frame (104-i) is set at a predefined positive offset, corresponding to a relative increase in compression level, from said compression level used when a spatially corresponding pixel block was last intra-coded in a previous image frame of the sequence (100).

**5.** The method of claim 4, wherein the compression level for each identified pixel block (408) is lowered to said compression level used when a spatially corresponding pixel block was last intra-coded in a previous image frame in the sequence (100).

**6.** The method of any one of the preceding claims, wherein the method is carried out each time an image frame (104-i) in the sequence of image frames (100) is to be inter-encoded.

**7.** The method of any one of the preceding claims, wherein the method is carried out for a selection of image frames in the sequence of image frames (100), the selection being fewer than every image frame in the sequence of image frames that is to be inter-coded.

**8.** The method of claim 7, further comprising:
determining (S07a), based on the number of identified pixel blocks (408) in a currently inter-encoded image frame (104-i), how often the method is to be carried out when inter-encoding future image frames in the sequence of image frames, wherein a higher number of identified pixel blocks (408) results in the method being carried out more often than would be done at a lower number of identified pixel blocks (408).

**9.** The method of any one of the preceding claims, wherein the inter-encoding in the first encoding pass (S04) operates on a lower resolution of the image frame than the inter-encoding in the second encoding pass (S10).

**10.** The method of claim 7, wherein the steps of obtaining a compression level (S02), inter-encoding the image frame in a first encoding pass (S04), and identifying pixel blocks (S06) are carried out each time an image frame is to be inter-encoded, but the steps of lowering the compression level (S08) and encoding the image frame in the second encoding pass (S10) are only carried out on a condition that the number of identified pixel blocks (408) in the image frame is higher than a pixel block threshold.

**11.** The method of any one of the preceding claims, wherein the compression level (404, 406) is higher for pixel blocks which are not within a region of interest of the image frame than for pixel blocks which are within a region of interest (402) of the image frame.

**12.** The method of any one of the preceding claims, wherein the first encoding pass (204) and the second encoding pass (206) are performed by the same encoding unit (214).

**13.** An encoder (200) for inter-encoding an image frame (104-i) in a sequence of image frames (100), comprising circuitry (202) configured to carry out the method of any one of claims 1-12.

**14.** A computer-readable storage medium (218) comprising computer program code which, when executed by a computer, causes the computer to carry out the method of any one of claims 1-12.

**1.** A method (300) for inter-encoding an image frame (104-i) in a sequence of image frames (100), comprising:
obtaining (S02) a compression level (404, 406) for each pixel block of the image frame, wherein the compression level corresponds to a quantization level and is higher for pixel blocks in some regions (402) of the image frame than for pixel blocks in other regions (403) of the image frame,
inter-encoding the image frame in a first encoding pass (S04) using the obtained compression level for each pixel block of the image frame, wherein some pixel blocks are intra-coded and other pixel blocks are inter-coded,
identifying (S06) pixel blocks (408) in the image frame that were intra-coded in the first encoding pass and for which the obtained compression level exceeds a compression level threshold,
lowering (S08) the compression level for each identified pixel block, and
inter-encoding the image frame (104-i) in a second encoding pass (S10) using the lowered compression level (410) for each identified pixel block (408) and using the obtained compression level (404, 406) for each remaining pixel block.

**2.** The method of claim 1, wherein the compression level for each identified pixel block (408) is lowered to a value which is equal to or below the compression level threshold.

**3.** The method of claim 1 or 2, wherein each pixel block in the image frame (104-i) has a respective compression level threshold which is set in relation to a compression level used when a spatially corresponding pixel block having a same spatial position as the pixel block was last intra-coded in a previous image frame in the sequence (100).

**4.** The method of claim 3, wherein the compression level threshold of a pixel block in the image frame (104-i) is set at a predefined positive offset, corresponding to a relative increase in compression level, from said compression level used when a spatially corresponding pixel block was last intra-coded in a previous image frame of the sequence (100).

**5.** The method of claim 4, wherein the compression level for each identified pixel block (408) is lowered to said compression level used when a spatially corresponding pixel block was last intra-coded in a previous image frame in the sequence (100).

**6.** The method of any one of the preceding claims, wherein the method is carried out each time an image frame (104-i) in the sequence of image frames (100) is to be inter-encoded.

**7.** The method of any one of the preceding claims, wherein the method is carried out for a selection of image frames in the sequence of image frames (100), the selection being fewer than every image frame in the sequence of image frames that is to be inter-coded.

**8.** The method of claim 7, further comprising:
determining (S07a), based on the number of identified pixel blocks (408) in a currently inter-encoded image frame (104-i), how often the method is to be carried out when inter-encoding future image frames in the sequence of image frames, wherein a higher number of identified pixel blocks (408) results in the method being carried out more often than would be done at a lower number of identified pixel blocks (408).

**9.** The method of any one of the preceding claims, wherein the inter-encoding in the first encoding pass (S04) operates on a lower resolution of the image frame than the inter-encoding in the second encoding pass (S10).

**10.** The method of claim 7, wherein the steps of obtaining a compression level (S02), inter-encoding the image frame in a first encoding pass (S04), and identifying pixel blocks (S06) are carried out each time an image frame is to be inter-encoded, but the steps of lowering the compression level (S08) and encoding the image frame in the second encoding pass (S10) are only carried out on a condition that the number of identified pixel blocks (408) in the image frame is higher than a pixel block threshold.

**11.** The method of any one of the preceding claims, wherein the compression level (404, 406) is higher for pixel blocks which are not within a region of interest of the image frame than for pixel blocks which are within a region of interest (402) of the image frame.

**12.** The method of any one of the preceding claims, wherein the first encoding pass (204) and the second encoding pass (206) are performed by the same encoding unit (214).

**13.** An encoder (200) for inter-encoding an image frame (104-i) in a sequence of image frames (100), comprising circuitry (202) configured to carry out the method of any one of claims 1-12.

**14.** A computer-readable storage medium (218) comprising computer program code which, when executed by a computer, causes the computer to carry out the method of any one of claims 1-12.
